# EUROPEAN PATENT APPLICATION

(11) **EP 1 801 800 A2**
(43) Date of publication of application: **27.06.2007**
(21) Application number: 06017008.1
(22) Date of filing: 16.08.2006
(51) Int. Cl.: G11B 20/00

(54) **Apparatus and method for preventing unauthorized copying**

(30) Priority: 23.12.2005 US 315168
(71) Applicant: Sham, Wellen, Taipei T'ai pei 11161 (TW)
(72) Inventor: Sham, Wellen, Taipei T'ai pei 11161 (TW)
(74) Representative: Helms, Joachim

(57) **Abstract**

The present application relates to an apparatus for preventing unauthorized copying that comprises a casing, an optical storage device, a control center installed in the casing and coupled to the optical storage device, and an input/output port installed in the casing and exposed from the casing and coupled to an electronic device, such that if a user places a medium into the optical storage device, the control center will determine whether or not the medium is a read-once medium; if yes, then the content of the medium will be copied to the control center. In the meantime, the electronic device is examined to check whether or not the electronic device is a copy permit user; if yes, then the control center will copy the content of the medium to the electronic device. The present application also provides a method for preventing unauthorized copying.

## Description

### BACKGROUND OF THE INVENTION

### Field of the Invention

The present invention relates to an apparatus for preventing unauthorized copying, and more particularly to an apparatus and a method for preventing unauthorized copying that check whether or not a medium placed in an optical storage device is a read-once medium, if yes then the content of the medium is copied to a control center, and the electronic device is examined to check whether or not the electronic device is copy permit user; if yes, then the control center permits the content of the medium to be copied to the electronic device.

### Description of the Related Art

In general, audio and video files can be downloaded from a server and played in a DVD or CD player by means of a simple security check according to a prior art. However, the security check may be skipped by users, and thus DVD or CD publishers cannot request users to pay for the downloaded files and thus the unauthorized use of DVD or CD media becomes more and more.

At present, there are systems or solutions that can solve the problem of protecting DVD or CD from unauthorized copying. For example, U.S. Pat. No. 5,991,403 issued to Aucsmith, et al disclosed a method for encoding MPEG compatible video data for subsequent compression that comprises detecting a plurality of frames of video data organized as a GOP, generating an encryption key for the GOP, and encrypting the video data using GOP-synchronized substitution, transposition, and rotation transformations that are parameterized by offsets derived from the generated encryption key. U.S. Pat. No. 5,915,018 issued to Aucsmith, et al disclosed a cryptographic system and method for secure distribution and management of cryptographic keys for use in a DVD copy protection scheme. A DVD disc having compressed, encrypted content written on a first portion of the disc, and the content encryption key, itself encrypted with a second key and written out of band on a second portion of the disc is used to provide content, key, and control information to a DVD player.

U.S. Pat. No. 5,991,403 is used for coding MPEG compatible video data for subsequent compression, and U.S. Pat. No. 5,915,018 is a cryptographic system and method for secure distribution and management of cryptographic keys for use in a DVD copy protection scheme. However, these patented technologies do not provide a system or a method for portable devices, and the portable device including but not limited to a portable medium player having an LCD display device can legally download audio files and video file in a DVD or CD and play the file from the portable device.

### Summary of the Invention

Therefore, it is a primary objective of the present invention to overcome the foregoing shortcomings of the prior art by providing an apparatus and a method for preventing unauthorized copying that allow audio and video files in a DVD or CD to be downloaded once to the electronic device legally.

Another objective of the present invention is to overcome the foregoing shortcomings of the prior art by providing an apparatus and a method for preventing unauthorized copying, such that the audio and video files in the DVD or CD will be destroyed after the audio and video files are downloaded to the electronic device.

To achieve the foregoing objectives, an apparatus for preventing unauthorized copying in accordance with the present invention comprises: a casing; an optical storage device; a control center disposed in the casing and coupled to the optical storage device; and an input/output port disposed in the casing and exposed from the casing and coupled to an electronic device; such that if a user places a medium into the optical storage device, the control center will determine whether or not the medium is a read-once medium; if yes, then the content of the medium will be copied to the control center, meanwhile the electronic deice is examined to check whether or not the electronic device is a copy permit user; if yes, then the control center will copy the content of the medium to the electronic device.

To achieve the foregoing objectives, a method for preventing unauthorized copying in accordance with the present invention comprises the steps of: providing a control center having a storage device, an input/output port, and a microcontroller; placing a medium into an optical storage device; the microcontroller determining whether or not the medium is a read-once medium; if yes, then copying the content of the medium to the storage device by the control of the microcontroller; and inserting an electronic device into the input/output port, and the microcontroller will check whether or not the electronic device is a copy permit user; if yes, then the content of the medium in the storage device is copied to the electronic device by the control of the microcontroller.

### BRIEF DESCRIPTION OF THE DRAWINGS

FIG. 1 is a schematic view of an apparatus for preventing unauthorized copying being connected to an electronic device according to a preferred embodiment of the invention;
FIG. 2 is a schematic block diagram of a control center according to a preferred embodiment of the present invention; and
FIG. 3 is a flow chart of a method for preventing unauthorized copying according to another preferred embodiment of the present invention.

### DETAILED DESCRIPTION OF THE PREFERRED EMBODIMENTS

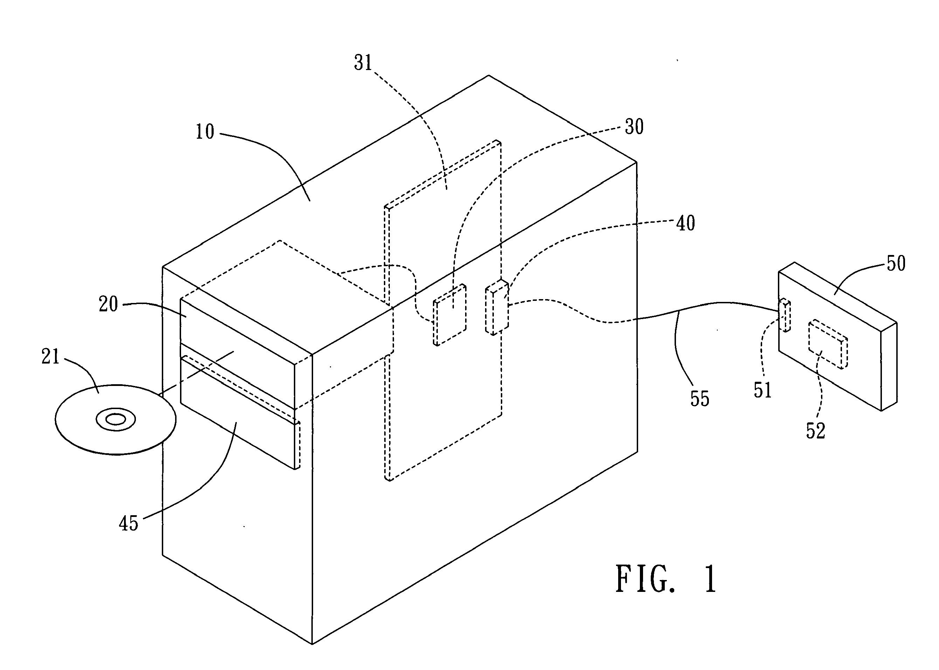

Referring to FIG. 1 for the schematic view of an apparatus for preventing unauthorized copying being connected to an electronic device 50 in accordance with a preferred embodiment of the present invention, the apparatus for preventing unauthorized copying comprises a casing 10, an optical storage device 20, a control center 30, and an input/output port 40.

The casing 10 is provided for containing components, and the casing 10 includes a plurality of slots and openings (not shown in the figure) of different sizes for exposing the optical storage device 20 and the input/output port 40.

The optical storage device 20 is installed in the casing 10 and exposed from the casing 10 for users to insert a disk, wherein the optical storage device 20 includes but not limited to a CD, a VCD, or a DVD player/burner.

The control center 30 is installed in the casing 10 and coupled to the optical storage device 20 for controlling the operation of the apparatus for preventing unauthorized copying according to the present invention.

The input/output port 40 is installed in the casing 10 and exposed from the casing 10 and coupled to an electronic device 50 such as a portable medium player; wherein the input/output port 40 includes but not limited to a USB input/output port, an IEEE1394 input/output port, a SATA input/output port, or an input/output port of other interface, and this preferred embodiment adopts a USB port for its illustration.

The portable medium player 50 also has an input/output port 51 coupled to the input/output port 40, wherein the input/output port 51 could be a USB I/O port, an IEEE 1394 I/O port, a SATA port, or an I/O port of other interface, and the portable medium player 50 also has a storage medium 52 for storing the downloaded content of the medium, and the storage medium 52 could be a non-volatile memory or a hard disk drive (HDD). If the storage medium 52 is a non-volatile memory, the non-volatile memory 52 includes a controllable file system for dividing the non-volatile memory 52 into a normal access area (not shown in the figure) and a protected area (not shown in the figure), such that data is downloaded into the protected area to prevent the file from being duplicated repeatedly. If the storage medium 52 is a hard disk drive (HDD) and has a personal computer file system, then the hard disk drive cannot be processed in the same way as the non-volatile memory. To prevent the file in the hard disk drive from being copied without authorization, the electronic device 50 further includes an encryption/decryption mechanism (not shown in the figure) for encrypting/decrypting the file to prevent the content in the hard disk drive from being copied without an authorization.

In an application, a user can plug a cable 55 of an electronic device 50 into the input/output port 40, and place a medium 21 including but not limited to a CD, a VCD, or a DVD into the optical storage device 20, and then the control center 30 will determine whether or not the medium 21 is a read-once medium, a read-protect optical disk, or a read-protect read-once optical disk; if yes, then the content of the medium 21 will be copied to the control center 30, and in the meantime the electronic device 50 is examined to check whether or not the electronic device is a copy permit user; if yes, then the control center 30 will copy the content of the medium 21 to the electronic device 50. Therefore, a user can legally play an audio file or video file on the electronic device 50 with a lower cost. In the meantime, CD, VCD or DVD publishers can earn reasonable profit from the read-once medium 21. The apparatus for preventing unauthorized copying in accordance with the invention definitely can overcome the shortcomings of the prior art, and provide a win-win solution for both users and CD, VCD or DVD publishers.

If the medium 21 is a read-once optical disk, the content in the optical storage device 20 will be destroyed after the content is copied to the control center 30; and if the medium 21 is a read-protect optical disk, the medium can be read by a specific optical storage device 20 only.

The apparatus for preventing unauthorized copying of the present invention further comprises a display device 45 including but not limited to an alphanumeric liquid crystal display or light emitting diode display device coupled to the control center 30 for displaying the information related to the operations of the apparatus for preventing unauthorized copying. For example, if the content of the medium 21 is not a read-once medium, the message "This medium is not a read-once medium" will be displayed to remind users.

The apparatus for preventing unauthorized copying of the present invention only allows the medium 21 to be downloaded once with an authorization, and the content of the medium 21 will be destroyed after being downloaded to protect the rights and benefits of CD, VCD, or DVD publishers.

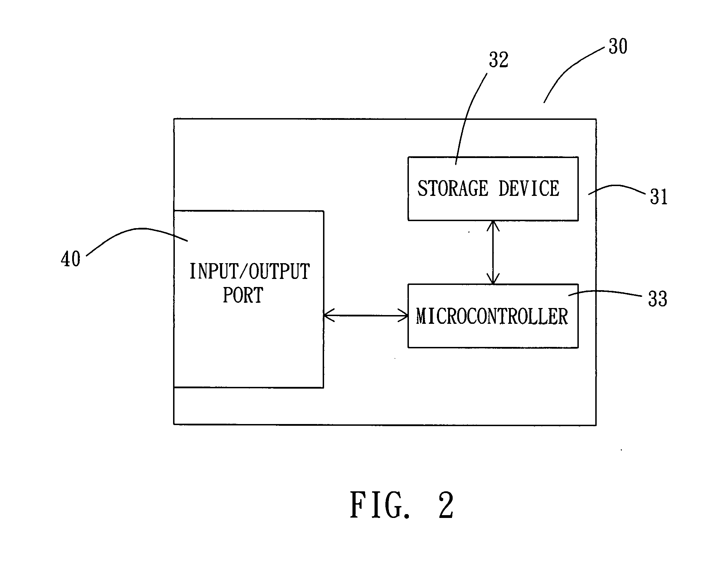

Referring to FIG. 2 for the schematic block diagram of a control center 30 according to a preferred embodiment of the present invention, the control center 30 further comprises a printed circuit board 31, a storage device 32, and a microcontroller 33.

The printed circuit board 31 is installed in the casing 10 for containing the components such as the storage device 32 and the microcontroller 33.

The storage device 32 including but not limited to a non-volatile memory or a hard disk drive disposed on the printed circuit board 31 (if the storage device 32 is a non-volatile memory) or in the casing 10 (if the storage device 32 is a hard disk drive) for storing data.

The microcontroller 33 is installed on the printed circuit board 31 and coupled to the storage device 32 for executing the operations of determining whether or not the medium is a read-once medium, examining whether or not the electronic device is a copy permit user, and copying data. The microcontroller 33 further includes a firmware (not shown in the figure) installed in the storage device 32 for controlling the microcontroller 33 to execute the operations of determining whether or not the medium is a read-once medium, examining whether or not the electronic device is a copy permit user, and copying data. If the electronic device 50 is inserted into the input/output port 40, the electronic device 50 will send an identification code (ID) to the microcontroller 33 for the identification, and the identification code further comprises a production serial number of the electronic device 50, a legal area authorization code, an authorized password, or any combinations of the above.

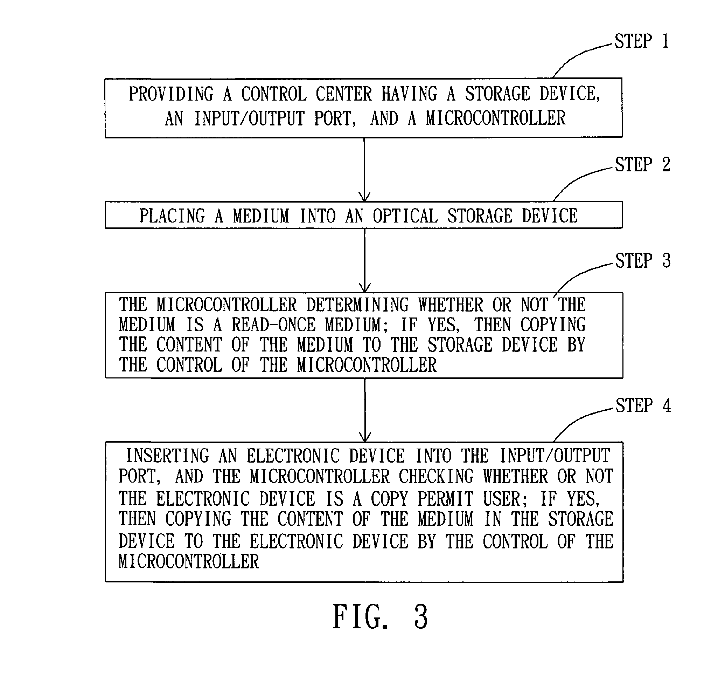

Referring to FIG. 3 for a flow chart of a method for preventing unauthorized copying according to another preferred embodiment of the present invention, the method for preventing unauthorized copying comprises the steps of: providing a control center 30 having a storage device 32, an input/output port 40, and a microcontroller 33 (Step 1); placing a medium 21 into an optical storage device 20 (Step 2); the microcontroller 33 determining whether or not the medium 21 is a read-once medium; if yes, then copying the content of the medium 21 to the storage device 32 by the control of the microcontroller 33 (Step 3); and inserting an electronic device 50 into the input/output port 40, and the microcontroller 33 checking whether or not the electronic device 50 is a copy permit user; if yes, then copying the content of the medium in the storage device 32 to the electronic device 50 by the control of the microcontroller 33 (Step 4).

In Step 1, the input/output port is a USB input/output port, an IEEE1394 input/output port, a SATA input/output port, or an input/output port of other interface.

In Step 2, the optical storage device 20 is a CD player/burner, a VCD player/burner, or a DVD player/burner, and the medium 21 is a CD, a VCD, or a DVD.

In Steps 3 to 4, the microcontroller 33 determines whether or not the medium 21 is a read-once medium; if yes, then the content of the medium 21 will be copied to the storage device 32 by the control of the microcontroller 33. In the meantime, the electronic device 50 is checked whether or not the electronic device is a copy permit user; if yes, then the content of medium 21 in the storage device 32 will be copied to the electronic device 50 by the control of the microcontroller 33. Therefore, users can play an audio file or a video file of the medium from the electronic device 50 legally with a low cost. In the meantime, the CD, VCD, or DVD publishers can earn reasonable profit by selling the read-once medium 21. Therefore, the apparatus for preventing unauthorized copying of the invention definitely can overcome the shortcomings of the prior art and provide a win-win solution for users and CD, VCD, or DVD publishers.

With the implementation of the present invention, the medium placed into optical storage device is examined to check whether or not the medium is a read-once medium; if yes, then the content of the medium will be copied to the control center. In the meantime, the electronic device is examined to check whether or not it is a copy permit user; if yes, then the control center will allow the content of the medium to be copied to the electronic device to prevent unauthorized copying. Therefore, the present invention definitely can overcome the prior art apparatus for preventing unauthorized copying.

While the invention has been described by way of example and in terms of a preferred embodiment, it is to be understood that the invention is not limited thereto. To the contrary, it is intended to cover various modifications and similar arrangements and procedures, and the scope of the appended claims therefore should be accorded the broadest interpretation so as to encompass all such modifications and similar arrangements and procedures.

In summation of the above description, the present invention herein enhances the performance than the conventional structure and further complies with the patent application requirements and is submitted to the Patent and Trademark Office for review and granting of the commensurate patent rights.

## Claims

1. An apparatus for preventing unauthorized copying, comprising:
a casing, for containing the following elements;
an optical storage device, installed in said casing and exposed from said casing;
a control center, installed in said casing and coupled to said optical storage device; and
an input/output port, disposed in said casing and exposed from said casing and coupled to an electronic device;
thereby, if a user places a medium into said optical storage device, said control center will determine whether or not said medium is a read-once medium; if yes, then the content of said medium will be copied to said control center, and meanwhile said electronic device is examined whether or not said electronic device is a copy permit user; if yes, then said control center will copy the content of said medium to said electronic device.

2. The apparatus for preventing unauthorized copying of claim 1, wherein said optical storage device is a CD player/burner, a VCD player/burner, or a DVD player/burner; and said input/output port is a USB input/output port, an IEEE1394 input/output port, a SATA input/output port, or an input/output port of other interface.

3. The apparatus for preventing unauthorized copying of claim 1, wherein said electronic device is a portable medium player having an input/output port coupled to said input/output port of said apparatus for preventing unauthorized copying and a storage medium for storing the downloaded content of said medium; wherein said input/output port is a USB input/output port, an IEEE1394 input/output port, a SATA input/output port, or an input/output port of other interface, and said storage medium is a non-volatile memory.

4. The apparatus for preventing unauthorized copying of claim 3, wherein said storage medium is a hard disk drive, and said electronic device further comprises an encryption/decryption mechanism for preventing the content of said hard disk drive from being copied without an authorization.

5. The apparatus for preventing unauthorized copying of claim 1, wherein said control center further comprises:
a printed circuit board, installed in said casing for containing the following elements;
a storage device, installed on said printed circuit board or in said casing for storing data; and
a microcontroller, installed on said printed circuit board and coupled to said storage device for executing the operations of determining whether or not said medium is a read-once medium, checking whether or not said electronic device is a copy permit user, and copying data.

6. The apparatus for preventing unauthorized copying of claim 5, wherein said microcontroller further comprises a firmware stored in said storage device for controlling said microcontroller to execute the operations of determining whether or not said medium is a read-once medium, checking whether or not said electronic device is a copy permit user, and copying data ; and said storage device is a non-volatile memory or a hard disk drive.

7. The apparatus for preventing unauthorized copying of claim 1, further comprising a display device coupled to said control center for displaying operation related information.

8. The apparatus for preventing unauthorized copying of claim 1, wherein said medium is a read-once optical disk, a read-protect optical disk, or a read-protect read-once optical disk; wherein said read-once optical disk will destroy the content stored in said optical storage device after the content is copied to said control center, and said read-protect optical disk can be read by a specific optical storage device only.

9. The apparatus for preventing unauthorized copying of claim 1, wherein said electronic device will send an identification code to said control center for carrying out an identification, if said electronic device is inserted into said input/output port, and said identification code further comprises a production serial number of said electronic device, a legal area authorization code, an authorized password, or any of their combinations.

10. A method for preventing unauthorized copying, comprising the steps of:
providing a control center having a storage device, an input/output port, and a microcontroller;
placing a medium into an optical storage device;
said microcontroller determining whether or not said medium is a read-once medium; if yes, then the content of said medium will be copied to said storage device by the control of said microcontroller; and
inserting an electronic device into said input/output port, and said microcontroller checks whether or not said electronic device is a copy permit user; if yes, then the content of said medium in said storage device will be copied to said electronic device by the control of said microcontroller.

11. The method for preventing unauthorized copying of claim 10, wherein said optical storage is a CD player/burner, a VCD player/burner, or a DVD player/burner; and said input/output port is a USB input/output port, an IEEE1394 input/output port, a SATA input/output port, or an input/output port of other interface.

12. The method for preventing unauthorized copying of claim 10, wherein said electronic device is a portable medium player comprising an input/output port coupled to said input/output port of said apparatus for preventing unauthorized copying, and a storage medium for storing the downloaded content of said medium, and said input/output port is a USB input/output port, an IEEE1394 input/output port, a SATA input/output port, or an input/output port of other interface.

13. The method for preventing unauthorized copying of claim 12, wherein said storage medium is a non-volatile memory or a hard disk drive, and if said storage medium is a hard disk drive; said electronic device further comprises an encryption/decryption mechanism for preventing the content of said hard disk drive from being copied without authorization.

14. The method for preventing unauthorized copying of claim 10, further comprising the step of providing a display device for displaying operation related information.

15. The method for preventing unauthorized copying of claim 10, wherein said medium is a read-once optical disk, a read-protect optical disk, or a read-protect read-once optical disk; wherein said read-once optical disk will destroy the content stored in said optical storage device after the content is copied to said control center, and said read-protect optical disk can be read by a specific optical storage device only..

16. The method for preventing unauthorized copying of claim 10, wherein said electronic device will send an identification code to said control center for carrying out an identification, if said electronic device is inserted into said input/output port, and said identification code further comprises a production serial number of said electronic device, a legal area authorization code, a legal password, or their combinations.
